# Europäisches Patentamt

# European Patent Office

# Office européen des brevets

(19)

(11) Veröffentlichungsnummer : **0 060 973**
**B1**

(12) **EUROPÄISCHE PATENTSCHRIFT**

(45) Veröffentlichungstag der Patentschrift :
15.05.85

(51) Int. Cl.⁴ : **F 16 B 13/00**

(21) Anmeldenummer : **82100464.5**

(22) Anmeldetag : **23.01.82**

(54) **Spreizdübel für die Verankerung in konisch nach innen erweitert hergestellten Bohrlöchern.**

(30) Priorität : **24.03.81 DE 3111504**

(43) Veröffentlichungstag der Anmeldung :
**29.09.82 Patentblatt 82/39**

(45) Bekanntmachung des Hinweises auf die Patenterteilung : **15.05.85 Patentblatt 85/20**

(84) Benannte Vertragsstaaten :
**AT BE CH FR GB IT LI NL SE**

(56) Entgegenhaltungen :
**CH-A- 353 879**
**DE-A- 2 437 308**
**DE-A- 2 613 499**
**DE-A- 2 833 077**
**DE-U- 7 125 107**
**FR-A- 2 085 076**
**GB-A- 866 258**

(73) Patentinhaber : **Artur Fischer Forschung**
**Weinhalde 14-18**
**D-7244 Waldachtal 3 (Tumlingen) (DE)**

(72) Erfinder : **Fischer, Artur, Dr. h.c.**
**Weinhalde 34**
**D-7244 Waldachtal 3/Tumlingen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Spreizdübel für die Verankerung in konisch nach innen erweitert hergestellten Bohrlöchern, bestehend aus einem am Bohrlochgrund sich abstützenden, einen Spreizkonus aufweisenden Stehbolzen mit Außengewinde, auf dessen Spreizkonus eine über einen Teil ihrer Länge mit Längsschlitzen versehene und zumindest in diesem Abschnitt im Innendurchmesser dem Schaft des Stehbolzens angepaßte Spreizhülse auftreibbar ist (siehe DE-A-2 613 499).

Durch konisch erweiterte Bohrlöcher ist es möglich, nahezu spreizdruckfreie Verankerungen durchzuführen, die aufgrund der erhöhten Aufspreizung des Befestigungselementes zusätzlich noch höhere Haltewerte erbringen. Allerdings sind zur Herstellung der konischen Bohrlöcher aufwendige Bohrvorrichtungen erforderlich, die die Befestigung mit höheren Kosten belasten.

Der Erfindung liegt daher die Aufgabe zugrunde, ein Befestigungselement zu schaffen, das bei stets gleichen Haltewerten und gleicher Bohrlochkontur die Möglichkeit bietet, das Anschlußteil in Anpassung an die zu befestigenden Gegenständen zu variieren.

Erfindungsgemäß wird dies dadurch erreicht, daß der Stehbolzen nach dem Auftreiben der Spreizhülse innerhalb des ungeschlitzten Teils der Spreizhülse endet und auf sein Außengewinde ein mit einem über die Oberfläche des Mauerwerks überragenden Anschlußteil versehenes Adapterstück aufschraubbar ist, wobei der Durchmesser der Innenbohrung der Spreizhülse im Anschluß an den ersten Abschnitt in einem zweiten Abschnitt bis zur Stirnseite der Spreizhülse dem Schaft des Adapterstückes angepaßt ist.

Durch die erfindungsgemäße Lösung ergibt sich im Bereich des geschlitzten Teils der Spreizhülse eine dickere Wandungsstärke, die eine vollständige Ausfüllung der Hinterschneidung des Bohrloches und damit hohe Haltewerte ermöglicht. Die Aufbohrung im Bereich des ungeschlitzten Teils der Spreizhülse ergibt einen Spalt zwischen dem Schaft des Stehbolzens und der Wandung der Innenbohrung der Spreizhülse, so daß das Aufschrauben eines Adapterstückes auf das Außengewinde des innerhalb des ungeschlitzten Teils der Spreizhülse endenden Stehbolzens möglich ist. Das über die Stirnseite der Spreizhülse und der Oberfläche des Mauerwerks hinausragende Anschlußteil des Adapterstückes kann in Anpassung an den zu befestigenden Gegenstand variiert werden.

In Ergänzung der Erfindung kann dieses Anschlußteil bspw. als Außengewinde ausgebildet sein, dessen Außendurchmesser größer ist als der Gewindeaußendurchmesser des Stehbolzens. Ferner besteht auch die Möglichkeit, das zum Aufschrauben auf das Außengewinde des Stehbolzens notwendige Innengewinde durch das Adapterstück durchgehen zu lassen, so daß von der gegenüberliegenden Seite des Adapterstückes eine Befestigungsschraube, Gewindestange oder dgl. einschraubbar ist. Ebenso kann das Anschlußteil als Lasche ausgebildet sein, um Drähte, Lochbänder oder dgl. einzuhängen.

In der Zeichnung sind Ausführungsbeispiele der Erfindung dargestellt. Es zeigen :

Figur 1 das Befestigungselement in verankertem Zustand

Figur 2 das Befestigungselement mit aufgeschraubtem Adapterstück

Figur 3 ein Adapterstück mit Innengewinde

Figur 4 ein Adapterstück mit Lasche.

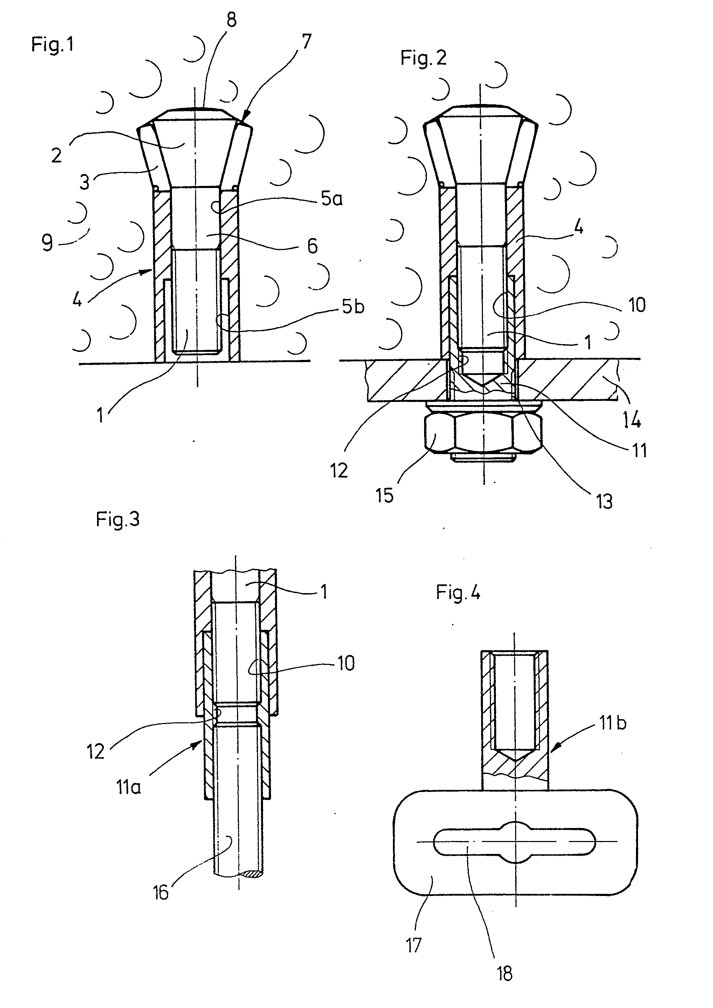

Der Spreizdübel nach Figur 1 besteht aus dem Stehbolzen 1 mit kegelförmigem Spreizkonus 2, und der über einen Teil ihrer Länge mit Längsschlitzen 3 versehenen Spreizhülse 4. Die Innenbohrung der Spreizhülse 4 weist zwei Abschnitte auf, wobei der Abschnitt 5a im Bereich des geschlitzten Teils der Spreizhülse im Durchmesser dem Schaft 6 des Stehbolzens 1 entspricht. An diesen Abschnitt 5a schließt sich ein bis zum Stirnende der Spreizhülse 4 sich erstreckender erweiterter Abschnitt 5b an. Zur Verankerung des Spreizdübels wird dieser in das mit einer Hinterschneidung 7 vorbereitete Bohrloch 8 im Mauerwerk 9 eingesetzt und durch Auftreiben der Spreizhülse 4 auf den am Bohrlochgrund sich abstützenden Stehbolzen 1 aufgespreizt. Danach wird gemäß Figur 2 auf das Gewinde 10 des innerhalb der Spreizhülse 4 endenden Stehbolzens 1 das Adapterstück 11 aufgeschraubt, das zu diesem Zweck ein Innengewinde 12 aufweist. Das als Außengewinde 13 ausgebildete, die Oberfläche des Mauerwerks überragende Anschlußteil des Adapterstückes 11 dient zur Befestigung eines Gegenstandes 14 mittels einer Mutter 15. Durch den gegenüber dem Stehbolzen 1 größeren Querschnitt des Adapterstückes 11 ergibt sich eine höhere Querkraftaufnahme für den zu befestigenden Gegenstand.

Das Adapterstück 11a gemäß Figur 3 weist ein durchgehendes, dem Gewinde 10 des Stehbolzens 1 angepaßtes Innengewinde 12 auf. Damit ist der Spreizdübel auch für die Befestigung von Gewindestangen 16 oder Befestigungsschrauben geeignet.

Figur 4 zeigt ein Adapterstück 11b, dessen Anschlußteil als Lasche 17 ausgebildet ist, in der ein zum Einhängen von Bändern oder Drähten geeigneter Durchbruch 18 angeordnet ist.

## Patentansprüche

1. Spreizdübel für die Verankerung in konisch nach innen erweitert hergestellten Bohrlöchern (8), bestehend aus einem am Bohrlochgrund sich abstützenden, einen Spreizkonus (2) aufweisenden Stehbolzen (1) mit Außengewinde (10), auf dessen Spreizkonus eine über einen Teil ihrer Länge mit Längsschlitzen (3) versehene und zumindest in diesem Abschnitt (5a) im Innendurchmesser dem Schaft (6) des Stehbolzens angepaßte Spreizhülse (4) auftreibbar ist, dadurch gekennzeichnet, daß der Stehbolzen (1) nach dem Auftreiben der Spreizhülse (4) innerhalb des ungeschlitzten Teils der Spreizhülse endet und auf sein Außengewinde (10) ein mit einem die Oberfläche des Mauerwerks überragenden Anschlußteil versehenes Adapterstück (11) aufschraubbar ist, wobei der Durchmesser der Innenbohrung der Spreizhülse im Anschluß an den ersten Abschnitt (5a) in einem zweiten Abschnitt (5b) bis zur Stirnseite der Spreizhülse dem Schaft des Adapterstückes angepaßt ist.

2. Spreizdübel nach Anspruch 1, dadurch gekennzeichnet, daß das Anschlußteil des Adapterstückes als Außengewinde (13), Innengewinde (12), Lasche (17) oder dgl. ausgebildet ist.

## Claims

1. Expansible plug for anchoring in boreholes (8) that are so prepared that they flare conically inwards, consisting of a stay bolt (1) that is supported at the base of the bore-hole and has an expander cone (2) and an external thread (10), onto which expander cone an expanding sleeve (4) that is provided along part of its length with longitudinal slots (3) and the internal diameter of at least a portion (5a) of which is matched to that of the shank (6) of the stay bolt can be driven, characterised in that the stay bolt (1), after the expanding sleeve (4) has been driven in, ends inside the unslotted part of the expanding sleeve and an adapter piece (11) provided with a connecting part that projects beyond the surface of the masonry can be screwed onto the external thread (10) of the stay bolt, the diameter of the internal bore of the expanding sleeve being matched in a second portion (5b), which is a continuation of the first portion (5a) as far as the front end of the expanding sleeve, to that of the shank of the adapter piece.

2. Expansible plug according to claim 1, characterised in that the connecting part of the adapter piece is constructed as an external thread (13), an internal thread (12), a bracket (17) of the like.

## Revendications

1. Cheville à expansion pour l'ancrage dans des trous forés (8) à épanouissement conique vers l'intérieur, cheville consistant en un goujon (1) présentant un cône (2) d'épanouissement s'appuyant sur le fond du trou foré ainsi qu'un filetage externe (10), cependant qu'un manchon d'expansion (4), muni sur une partie de sa longueur de fentes longitudinales (3) et dont le diamètre interne correspond, au moins dans ce tronçon (5a) à la tige (6) du goujon, peut être enfoncé et épanoui en épousant le cône d'épanouissement du goujon, cheville caractérisée en ce que le goujon (1) se termine, après épanouissement du manchon (4), à l'intérieur de la partie non fendue du manchon d'expansion et en ce qu'on peut visser sur son filetage externe (10) un embout (11) de raccordement présentant un prolongement en forme de partie de raccordement faisant saillie sur la surface de la maçonnerie, le diamètre du trou interne du manchon correspondant, dans un second tronçon (5b) faisant suite au premier tronçon (5a) et jusqu'à l'avant du manchon, à la tige de l'embout de raccordement.

2. Cheville d'expansion selon la revendication 1, caractérisée en ce que la partie du raccordement de l'embout a la forme d'un filetage externe (13), d'un filetage interne ou taraudage (12) ou d'une patte (17) ou une forme analogue.

Fig.1

Fig.2

Fig.3

Fig.4